(19) Europäisches Patentamt
European Patent Office
Office européen des brevets

(11) Veröffentlichungsnummer: **0 010 602 B1**

(12) **EUROPÄISCHE PATENTSCHRIFT**

(45) Veröffentlichungstag der Patentschrift: **12.05.82**

(51) Int. Cl.³: **C 08 G 63/62**, C 08 G 63/20

(21) Anmeldenummer: **79103471.3**

(22) Anmeldetag: **17.09.79**

# (54) Polycarbonate mit Alkylphenyl-Endgruppen und ihre Herstellung.

(30) Priorität: **27.09.78 DE 2842005**

(43) Veröffentlichungstag der Anmeldung: **14.05.80 Patentblatt 80/10**

(45) Bekanntmachung des Hinweises auf die Patenterteilung: **12.05.82 Patentblatt 82/19**

(84) Benannte Vertragsstaaten: **DE FR GB IT NL**

(56) Entgegenhaltungen:
**DE-A-2 063 050**
**US-A-3 177 179**
**US-A-3 544 514**

(73) Patentinhaber: **BAYER AG, Zentralbereich Patente, Marken und Lizenzen, D-5090 Leverkusen 1, Bayerwerk (DE)**

(72) Erfinder: **Freitag, Dieter, Dr., Hasenheide 10, D-4150 Krefeld (DE)**
Erfinder: **Nouvertné, Werner, Dr., Scheiblerstrasse 95, D-4150 Krefeld (DE)**
Erfinder: **Burkhardt, Claus, Dr., Hasenheide 12, D-4150 Krefeld (DE)**
Erfinder: **Kleiner, Frank, Dr., Gerstenkamp 4, D-5000 Köln 80 (DE)**

EP 0 010 602 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Polycarbonate mit Alkylphenyl-Endgruppen und ihre Herstellung

Gegenstand der vorliegenden Erfindung sind thermoplastische aromatische Polycarbonate mit Molekulargewichten $\overline{M}w$ (Gewichtsmittel) von mindestens 10 000, insbesondere von 10 000 bis 200 000 und vorzugsweise von 20 000 bis 80 000 auf Basis von Diphenolen, phenolischen Kettenabbrechern der Formel I

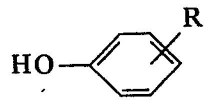

und gegebenenfalls Verzweigern, die dadurch gekennzeichnet sind, daß R einen verzweigten Alkylrest aus 8 und/oder 9 C-Atomen darstellt, wobei im Alkylrest R der Anteil an $CH_3$-Protonen zwischen 47 und 89% und der Anteil der Summe der CH- und $CH_2$-Protonen zwischen 53 und 11% liegen, und worin R in o- und/oder p-Stellung zur OH-Gruppe stehen kann, wobei die obere Grenze des ortho-Anteils bei 20% liegt.

Gegenstand der vorliegenden Erfindung ist außerdem ein Verfahren zur Herstellung der erfindungsgemäßen thermoplastischen aromatischen Polycarbonate mit $\overline{M}w$ von mindestens 10 000, insbesondere 10 000 bis 200 000, vorzugsweise 20 000 bis 80 000, das dadurch gekennzeichnet ist, daß man Diphenole, vorzugsweise solche der Formel II

$$HO—Z—OH \qquad II$$

worin Z ein zweiwertiger aromatischer Rest ist mit vorzugsweise 6 bis 30 C-Atomen, gegebenenfalls Verzweiger und 0,1–8 Mol-%, vorzugsweise 0,1–5 Mol-%, bezogen auf Mole Diphenole, an phenolischem Kettenabbrecher der Formel I, worin R die für die Formel I bereits genannte Bedeutung hat, nach dem bekannten Phasengrenzflächenverfahren umsetzt.

Die erfindungsgemäßen Polycarbonate zeigen im Vergleich zu den üblicherweise mit Phenol, 2,6-Dimethylphenol und p-tert.-Butylphenol als Kettenregler hergestellten Polycarbonate eine wesentlich erhöhte Hydrolysenfestigkeit und eine verbesserte kritische Breite bei sonst vergleichbaren mechanischen und thermischen Eigenschaften.

Verglichen mit den Polycarbonaten der japanischen Offenlegungsschrift Nr. 34 992/76, wo unter anderem p-Nonylphenol als Kettenabbrecher für die Polycarbonatherstellung eingesetzt wird (siehe Beispiel 5 von JP-A-34 992/76) haben die erfindungsgemäßen Polycarbonate keine Erniedrigung der Wärmeformbeständigkeit, was nicht vorhersehbar war. (Siehe Wärmeformbeständigkeitswerte in JP-A-34 992/76 für Vergleichsbeispiel mit p-tert.-Butylphenol als Kettenabbrecher = 135°C und für Beispiel 5 mit p-Nonylphenol als Kettenabbrecher = 128°C, sowie die Vicat B Temperatur für die Vergleichsbeispiele 3 und 5 der vorliegenden Patentanmeldung.)

Die Polycarbonate der JP-A-34 992/76 zeigen darüber hinaus keine Verbesserungen der Hydrolysefestigkeit und der kritischen Breite gegenüber den konventionellen, mit Phenol als Kettenabbrecher hergestellten Polycarbonaten. (Siehe Vergleichsbeispiele 4 und 5 vorliegender Patentanmeldung.)

Die zum Kettenabbruch erfindungsgemäß einzusetzenden Alkylphenole der Formel I sind preiswert und als Handelsprodukt erhältlich. Sie können hergestellt werden, wie in Journ. Am. Chem. Soc., 56, 1583–6 (1934), beschrieben, durch Alkylierung von Phenol mit dem entsprechenden Halogenid oder durch Alkylierung von Phenol mit dem entsprechenden Olefin. Nach diesem Verfahren gelingt es z. B. 4-(1,3-Tetramethyl-butyl)-phenol durch Umsetzung von Isobutylen mit Phenol in Gegenwart von konzentrierter Schwefelsäure oder durch Umsetzung von Phenol mit Isobutylchlorid in Gegenwart von Kaliumhydroxid mit sehr guten Ausbeuten herzustellen.

Als Diphenole der Formel II, die vorzugsweise 6 bis 30 C-Atome enthalten, sind sowohl ein- als auch mehrkernige Diphenole zu verstehen, die Hereroatome enthalten können und substituiert sein können. Folgende Diphenole sind geeignet:

Hydrochinon,
Resorcin,
Dihydroxydiphenyle,
Bis-(hydroxyphenyl)-alkane,
Bis-(hydroxyphenyl)-cycloalkane,
Bis-hydroxyphenyl)-sulfide,
Bis-hydroxyphenyl)-äther,
Bis-(hydroxyphenyl)-ketone,
Bis-(hydroxyphenyl)-sulfoxide,
Bis-(hydroxyphenyl)-sulfone,
$\alpha,\alpha'$-Bis-(hydroxyphenyl)-diisopropylbenzole

sowie deren kernalkylierte und kernhalogenierte Verbindungen. Diese und weitere geeignete Diphenole sind z. B. in den US-PS 3 028 365, 2 999 835, 3 148 172, 3 271 368, 2 991 273, 3 271 367, 3 280 078, 3 014 891 und 2 999 846, in den deutschen Offenlegungsschriften 1 570 703, 2 063 050, 2 036 052, 2 211 956, der französischen Patentschrift 1 561 518 und in der Monographie »H. Schnell, Chemistry and Physics of Polycarbonates, Interscience Publiers, New York, 1964«, beschrieben.

Bevorzugte Diphenole sind z. B.:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-Dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-caclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan.

Besonders bevorzugte Diphenole sind z. B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen mitverwendet werden. Einige der verwendbaren Verbindungen mit drei oder mehr als drei phenolischen Hydroxylgruppen sind beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-Äthan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die Herstellung der erfindungsgemäßen Polycarbonate erfolgt vorzugsweise nach dem Phasengrenzflächenverfahren (vgl. H. Schnell, »Chemistry and Physics of Polycarbonates«, Polymer Reviews, Vol. IX, Seite 33 ff., Interscience Publ., 1964).

Hierbei werden die Diphenole der Formel II in wäßrig alkalischer Phase gelöst. Dazu werden die zur Herstellung der erfindungsgemäßen Polycarbonate erforderlichen Verbindungen der Formel I in Mengen von 0,1 – 8 Mol-%, vorzugsweise 0,1 – 5 Mol-%, bezogen auf Mole Diphenole der Formel II, in einem organischen Lösungsmittel gelöst zugegeben. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 und 40° C.

Die gegebenenfalls mitzuverwendenden 0,05 bis 2 Mol-%, bezogen auf Diphenole der Formel II, an Verzweigern können entweder mit den Diphenolen in der wäßrig alkalischen Phase vorgelegt werden oder mit den Kettenabbrechern in dem organischen Lösungsmittel gelöst vor der Phosgenierung zugegeben werden.

Anstelle der Diphenole der Formel II können auch deren Mono- und/oder Bis-chlorkohlensäureester mitverwendet werden, wobei diese in organischen Lösungsmitteln gelöst zugegeben werden. Die Menge an Kettenabbrecher der Formel I sowie an Verzweiger richtet sich dann nach Molen Struktureinheiten Z; ebenso kann bei Einsatz von Chlorkohlensäureester die Phosgenmenge in bekannter Weise entsprechend reduziert werden.

Die erfindungsgemäß einzusetzenden Kettenabbrecher der Formel I können auch während der Phosgenierung zugesetzt werden. Geeignete organische Lösungsmittel für die Lösung der Kettenabbrecher der Formel I sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol.

Als organische Phase für die Phasengrenzflächenpolykondensation dient beispielsweise Methylenchlorid, Chlorbenzol sowie Mischungen aus Methylenchlorid und Chlorbenzol.

Die Herstellung der erfindungsgemäßen Polycarbonate nach dem Phasengrenzflächenverfahren kann in üblicher Weise durch Katalysatoren wie tertiäre Amine, insbesondere tertiäre aliphatische Amine wie Tributylamin oder Triäthylamin katalysiert werden; die Katalysatoren können in Mengen von 0,05 bis 10 Mol-%, bezogen auf Mole Diphenole der Formel II bzw. Mole Struktureinheiten Z eingesetzt werden. Die Katalysatoren können vor Beginn der Phosgenierung oder während oder auch nach der Phosgenierung zugesetzt werden.

Die Isolierung der erfindungsgemäßen Polycarbonate erfolgt in bekannter Weise.

Erfindungsgemäß geeignete Verbindungen der Formel I sind beispielsweise

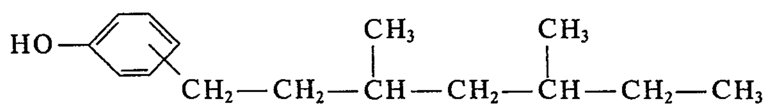

und

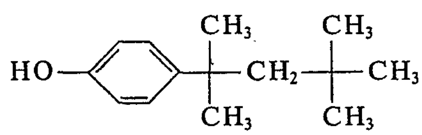

Es können für die Herstellung der erfindungsgemäßen Polycarbonate sowohl eine als auch Gemische der Verbindungen der Formel I zusammen eingesetzt werden.

Die erfindungsgemäßen aromatischen Polycarbonate sollen Molekulargewichte $\overline{M}w$ (Gewichtsmittel) von mindestens 10 000, insbesondere von 10 000 bis 200 000, vorzugsweise von 20 000 bis 80 000 haben. (Ermittelt durch Gelchromatographie nach vorheriger Eichung.) Sie können Alterungsschutzmittel enthalten, die die Stabilität der Verfahrensprodukte wesentlich erhöhen. Zur Modifizierung der erfindungsgemäßen Produkte können Substanzen wie z. B. Ruß, Kieselgur, Kaolin, Tone, $CaF_2$, $CaCO_3$, Aluminiumoxide, Glasfasern und anorganische Pigmente sowohl als Füllstoffe als auch als Nucleierungsmittel zugesetzt werden. Ebenso können sie die für Polycarbonat üblichen Entformungsmittel, wie z. B. Glycerintristearat, enthalten. In den nachfolgenden Beispielen ist $\eta$ rel. gemessen in $CH_2Cl_2$ bei 25° C und einer Konzentration von 0,5 Gew.-%.

## Beispiel 1

3,42 kg Bisphenol A, gelöst in 6,67 kg 45%iger Natronlauge und 37,7 kg Wasser, werden mit 53 kg Methylenchlorid bei 20°C vorgelegt. In die gerührte Mischung wird in ca. 15 Min. unter Rühren eine Lösung von 123,6 g 4-(1,3-Tetramethyl-butyl)-phenol in 100 g Methylenchlorid gegeben, anschließend bei pH 13–14 und 21–25°C in 1 h 2,23 kg Phosgen eingeleitet. 15,15 g Triäthylamin werden danach hinzugegeben und noch 30' gerührt.

Die bisphenolatfreie wäßrige Phase wird abgetrennt, die organische Phase nach Ansäuern mit Phosphorsäure mit Wasser neutral gewaschen und von Lösungsmittel befreit. Das Polycarbonat zeigte die rel. Lösungsviskosität von $\eta_{rel} = 1,288$.

## Beispiel 2

Wie in Beispiel 1 beschrieben, wurde ein Polycarbonat mit 4 Mol-% eines Gemisches aus 87% 4-(3,5-Dimethylheptyl)-phenol und 13% 2-(3,5-Dimethylheptyl)-phenol hergestellt. $\eta_{rel} = 1,284$.

Vergleichsbeispiele 3 – 5

Wie in Beispiel 1 beschrieben, wurden Polycarbonate mit den entsprechenden Mol-% an folgenden Kettenabbrechern hergestellt:

Beispiel 3, mit 4% p-tert.-Butylphenol $\eta_{rel} = 1{,}284$
Beispiel 4, mit 4% Phenol $\eta_{rel} = 1{,}285$
Beispiel 5, mit 4% p-Iso-dodecylphenol $\eta_{rel} = 1{,}280$

Die Hydrolysen-Werte und die Werte für die kritische Breite der Polycarbonate nach den Beispielen 1 – 5 sind der Tabelle 1 zu entnehmen.

Tab. 1:

Hydrolysebeständigkeit und kritische Breite von Polycarbonaten in Abhängigkeit von der Art des Kettenabbrechers

| | *n* rel. | Vicat B nach DIN 55 460 °C | Kritische Breite*) (mm) | Hydrolysentest: Schlagzähigkeit (nach DIN 53 453) (kJ/m$^2$) nach 1000 h Verweilzeit in siedendem Wasser – Ausgang 10 Prüfkörper |
|---|---|---|---|---|
| Polycarbonat nach Beispiel | | | | |
| 1 | 1,288 | 149 | 6,7–6,9 | 7 × n. gebr. |
| 2 | 1,284 | 146 | 7,0–7,3 | 8 × n. gebr. |
| Vergleichsbeispiele | | | | |
| 3 | 1,284 | 148 | 5,7–6,0 | 2 × n. gebr. |
| 4 | 1,285 | 147 | 5,3–5,4 | alle gebr. |
| 5 | 1,280 | 138 | 4,1–4,3 | alle gebr. |

*) Die kritische Breite ist die Prüfkörper-Breite, ab der Polycarbonat einen Steilabfall in der Izod-Kerbschlagzähigkeit, gemessen in µm in Anlehnung an ASTM 256-56 zeigt.

**Patentansprüche**

1. Thermoplastische aromatische Polycarbonate mit Molekulargewichten $\overline{M}w$ (Gewichtsmittel) von mindestens 10 000 auf Basis von Diphenolen, phenolischen Kettenabbrechern der Formel I

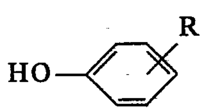

und gegebenenfalls Verzweigern, dadurch gekennzeichnet, daß R einen verzweigten Alkylrest aus 8 und/oder 9 C-Atomen darstellt, wobei im Alkylrest der Anteil an $CH_3$-Protonen zwischen 47 und 89% und der Anteil der Summe der CH- und $CH_2$-Protonen zwischen 53 und 11% liegen, und worin R in o- und/oder p-Stellung zur OH-Gruppe stehen kann, wobei die obere Grenze des ortho-Anteils bei 20% liegt.

2. Verfahren zur Herstellung der Polycarbonate des Patentanspruchs 1, dadurch gekennzeichnet, daß man Diphenole, gegebenenfalls Verzweiger und 0,1 Mol-% bis 8 Mol-%, bezogen auf Mole Diphenole, an phenolischem Kettenabbrecher der Formel I, worin R die in Anspruch 1 genannte Bedeutung hat, nach dem bekannten Phasengrenzflächenverfahren umsetzt.

**Claims**

1. Thermoplastic aromatic polycarbonates with molecular weights $\overline{M}w$ (weight average) of at least 10,000, which are based on diphenols, phenolic chain stoppers of the formula I

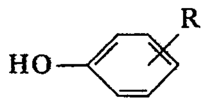

and, if appropriate, branching agents, characterised in that R represents a branched alkyl radical consisting of 8 and/or 9 C atoms, and, in the alkyl radical, the proportion of $CH_3$ protons is between 47% and 89% and the proportion of the sum of the CH and $CH_2$ protons is between 53% and 11%, and wherein R can be in the o-position and/or p-position relative to the OH group, the upper limit of the ortho proportion being 20%.

2. Process for the preparation of the polycarbonates of Patent Claim 1, characterised in that diphenols, if appropriate branching agents and 0.1 mol % to 8 mol %, relative to the mols of diphenols, of phenolic chain stoppers of the formula I, wherein R has the meaning indicated in Claim 1, are reacted by the known phase boundary process.

**Revendications**

1. Polycarbonates aromatiques thermoplastiques de poids moléculaire $\overline{M}w$ (moyenne en poids) au moins 10 000, à base de diphénols, de coupeurs de chaînes phénoliques de formule I

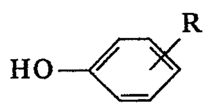

et le cas échéant d'agents ramifiants, caractérisés en ce que R représente un groupe alkyle ramifié en $C_8$ et/ou $C_9$, la proportion des protons de $CH_3$ dans le groupe alkyle est de 47 à 89% et la proportion de la somme des protons de CH et de $CH_2$ est de 53 à 11%, R peut se trouver en position ortho et/ou para du groupe OH, la limite supérieure de la proportion de groupes ortho étant de 20%.

2. Procédé de préparation des polycarbonates de la revendication 1, caractérisé en ce que l'on fait réagir des diphénols, le cas échéant des agents ramifiants et 0,1 à 8 moles %, par rapport aux moles de diphénols, de coupeurs de chaînes phénoliques de formule I dans laquelle R a la signification indiquée dans la revendication 1, par la technique connue à l'interface de phases.